Europäisches Patentamt

European Patent Office

Office européen des brevets

(11) Publication number: **0 258 043 B1**

## EUROPEAN PATENT SPECIFICATION

(45) Date of publication of patent specification: **03.06.92**　(51) Int. Cl.⁵: **G11B 20/18**, G11B 20/12

(21) Application number: **87307528.7**

(22) Date of filing: **25.08.87**

(54) **Information record medium having a header having error correction code added for each block and a method for recording information on such a medium.**

(30) Priority: **26.08.86 JP 198211/86**
　　　　　**26.08.86 JP 198212/86**

(43) Date of publication of application:
**02.03.88 Bulletin 88/09**

(45) Publication of the grant of the patent:
**03.06.92 Bulletin 92/23**

(84) Designated Contracting States:
**DE FR GB IT NL**

(56) References cited:
**EP-A- 0 114 186**
**EP-A- 0 140 696**

**DIGEST OF PAPERS - SEVENTH IEEE SYMPO-SIUM ON MASS STORAGE SYSTEMS, Tucson, Arizona, US, 4th-7th November 1985, pages 38-42, IEEE; D. THOMAS: "A high-speed data management system with on-line optical disk storage"**

**PATENT ABSTRACTS OF JAPAN, vol. 10, no. 102 (P-448)[2159], 18th April 1986; & JP-A-60 236 166**

**PATENT ABSTRACTS OF JAPAN, vol. 7, no.**

**192 (P-218)[1337], 23rd August 1983; & JP-A-58 91 512**

**WIRELESS WORLD, vol. 88, no. 1561, October 1982, pages 80-82,84, Sheepen Place, Olchester, GB; J.R. WATKINSON: "Floppy-disc drives"**

(73) Proprietor: **CANON KABUSHIKI KAISHA**
**30-2, 3-chome, Shimomaruko, Ohta-ku**
**Tokyo(JP)**

(72) Inventor: **Sakagami, Wataru**
**17-11 Nakahara 3-chome Isogo-ku**
**Yokohama-shi Kanagawa-ken(JP)**
Inventor: **Ogasawara, Yutaka**
**3-26 Tsunashima-nishi 6-chome Kohoku-ku**
**Yokohama-shi Kanagawa-ken(JP)**

(74) Representative: **Beresford, Keith Denis Lewis et al**
**BERESFORD & Co. 2-5 Warwick Court High Holborn**
**London WC1R 5DJ(GB)**

# Description

The present invention relates to an information record medium having information thereof divided into a plurality of blocks and a method for recording information on such a medium.

## Background Art

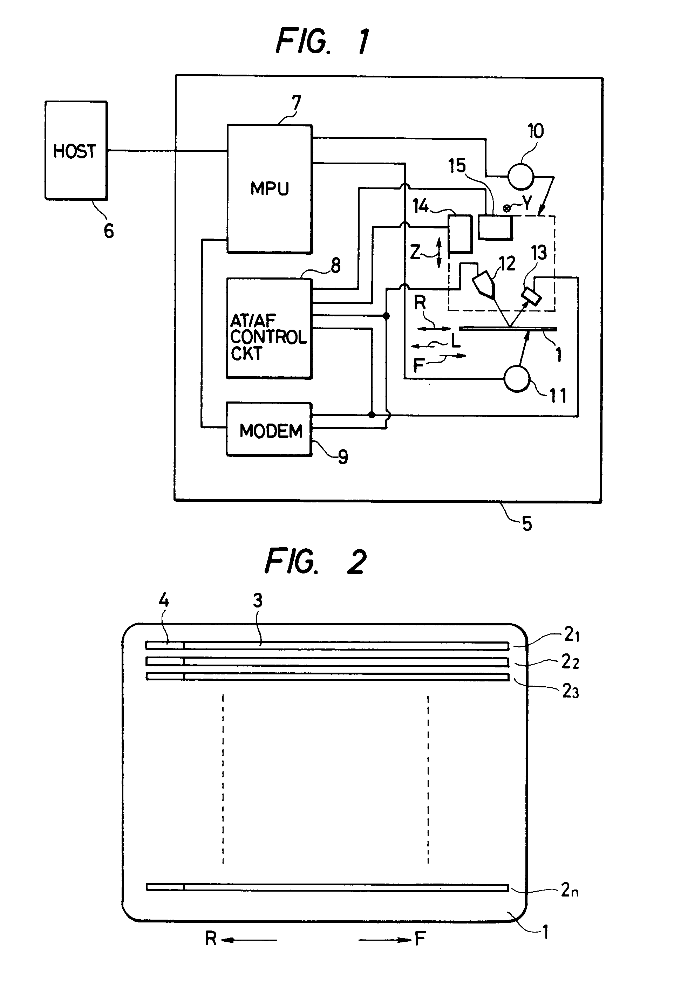

Floppy disk magnetic tape and compact disk have been used as information record media. In those media, information is written data block by data block such as sector or record. The block includes a data field as well as block information concerning the block per se. In the floppy disk, it may be track number, sector number and CRC (Cyclic redundancy check). For example, U. S. Patent Number 4888753 specification, lines 12-25 and Fig. 1 describes and shows that information is recorded block by block on a card-like optical record medium (optical card) and an address is added to each block. JP-A-5891512 shows a medium in which a CRC error detection code is provided for the block information header field, but the data is not encoded. On the other hand, in an information record medium having a high data error rate, data is converted to information having an error correction code (ECC) added thereto to correct an error for each block. The ECC has a very high error correction capability but it uses a substantial portion of the block.

The IBM floppy disc standard, described in WIRELESS WORLD, Volume 88, No 1561, October 1982 pages 80 - 82, 84, Sheepen Place, Olchester; J.R. Watkinson. "Floppy-Disc Drives", employs an error detecting CRC byte following the header field and a separate two-byte error detecting CRC code following the data field. The NASA DSTP data management system described in DIGEST OF PAPERS - 7TH IEEE SYMP ON MASS STORAGE SYSTEMS, Arizona, US, 4-7 November 1985, pages 38 - 42, IEEE, D Thomas: "A high speed data management system with on-line optical disk storage" discloses a medium on which packets comprising a header and error correction encoded data are stored, the coding co-efficients likewise being stored.

Accordingly, for information which does not require high quality of data such as image information or music information, the ECC is not used but the corresponding area is used for raw data.

## SUMMARY OF THE INVENTION

It is an object of the present invention to provide an information record medium which allows reproduction of reliable information while maintaining sufficient capacity to record data, and a method for recording information on such a medium.

Accordingly, the invention provides, in one aspect, an information record medium upon which information is recorded in a plurality of blocks, each said block comprising a data field within which information to be reproduced is recorded, and a header field including information identifying that block, the block further comprising header field error encoding data, characterized in that the block further comprises an indicator field indicating whether or not the data field is encoded employing an error correction code. A method of recording, and of reading, such a medium are likewise provided, as are an apparatus for recording and/or reading such a medium.

Other aspects and preferred features are as defined in the claims.

## BRIEF DESCRIPTION OF THE DRAWINGS

Fig. 1 shows an information recording and reproducing apparatus which uses an information record medium of the present invention,

Fig. 2 shows a plan view of one embodiment of the information record medium of the present invention,

Fig. 3 shows a flow chart of a procedure for recording information on the medium of the present invention,

Figs. 4 and 5 show flow charts of a procedure for reproducing the information from the medium of the present invention, and

Fig. 6 shows a plan view of another embodiment of the information recording medium of the present invention.

## DETAILED DESCRIPTION OF THE PREFERRED EMBODIMENTS

In the following description of the embodiments of the information record medium, an optical card is explained.

Fig. 1 shows an information recording and reproducing apparatus used in the present invention.

The information recording and reproducing apparatus (drive unit) is connected to a host control unit (host) 6 and data is communicated and controlled between the drive 5 and the host 6. A microprocessing unit (MPU) 7 in the drive unit 5 contains a read-only memory (ROM) and a randam access memory (RAM), and it primarily controls a card feed motor 11 and a head drive motor 10. An auto -tracking (AT)/auto-focusing (AF) control circuit 8 receives a signal from a photosensor 13 to drive an AF actuator 14 and an AT actuator 15. A modem circuit 9 records data by changing an intensity of a light source 12 in a record mode, and demodulates data by a signal from the photo-sensor 13 in a reproduce mode.

The host 6 sends and receives data to and from the drive unit 5 to record and reproduce information for each block of an optical card 1 which is the information recording medium.

Since the optical card 1 has a high error rate because of the nature of the medium, error correction means is necessary when highly reliable information is required.

Fig. 2 shows a plan view of the optical card of the present invention.

Tracks $2_1$, $2_2$, $2_3$, ..... $2_n$ which are information record blocks are formed in parallel on the optical card 1. Each of the tracks comprises a header field 4 which contains block information and a data field 3. The header field 4 includes a track number of the corresponding track which is address information of the block and information indicating presence or absence of ECC in the data field 3. The data field 3 has either the ECC added thereto to possess an error correction ability or no ECC added thereto. The optical card 1 is reciprocally moved in the directions of F and R in Fig. 2 to record and reproduce the information. The header field 4 is treated as a unit and the ECC is added thereto so that it possesses the error correction ability. Since the header field requires high reliability, it has always the ECC added thereto, unlike the data field.

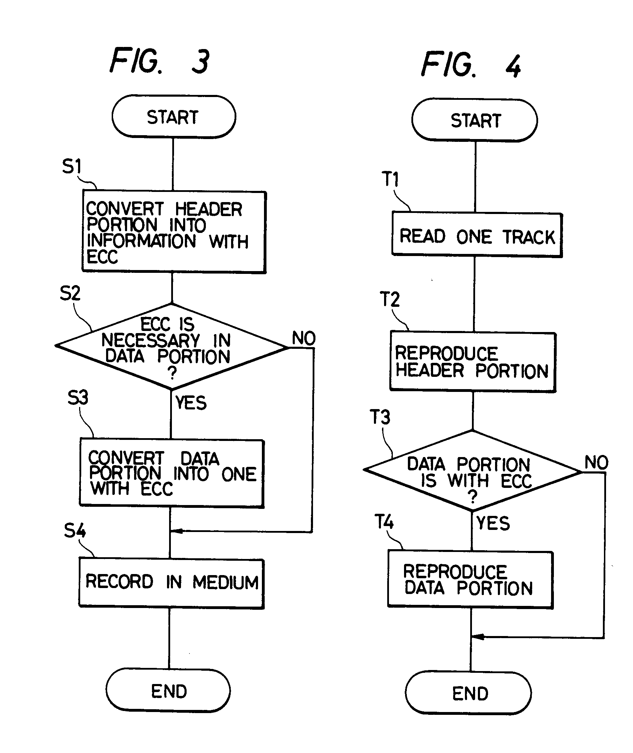

Fig. 3 shows a flow chart of a procedure to write data onto one track of the optical card. Prior to the writing, data to be recorded is divided into a plurality of blocks by a predetermined information unit. A header field is added to each of the divided data to form one track of information.

In a step S1, the data to be recorded in the header field is converted to data with the ECC. In a step S2, whether the ECC is to be added to the data field or not is checked, and if it is not to be added, the process proceeds to a step S4. If it is to be added the process proceeds to a step S3 where the data is converted to data with ECC. In the step S4, one track of data comprising the header field and the data field is recorded on the optical card.

Fig. 4 shows a flow chart of a procedure to reproduce the data recorded on the optical card.

In a step T1, one track of data recorded on the optical card is read. In a step T2, the header field with the ECC in the track is converted to the original data. In a step T3, whether the data field is with the ECC or not is checked based on the converted header data. If it is without the ECC, the process terminates. If it is with the ECC, the data with the ECC in the data field is converted to the original data. If only the content of the header field is to be detected such as in a track search mode, only the header field may be read instead of the entire one track in the step T1 of Fig. 4.

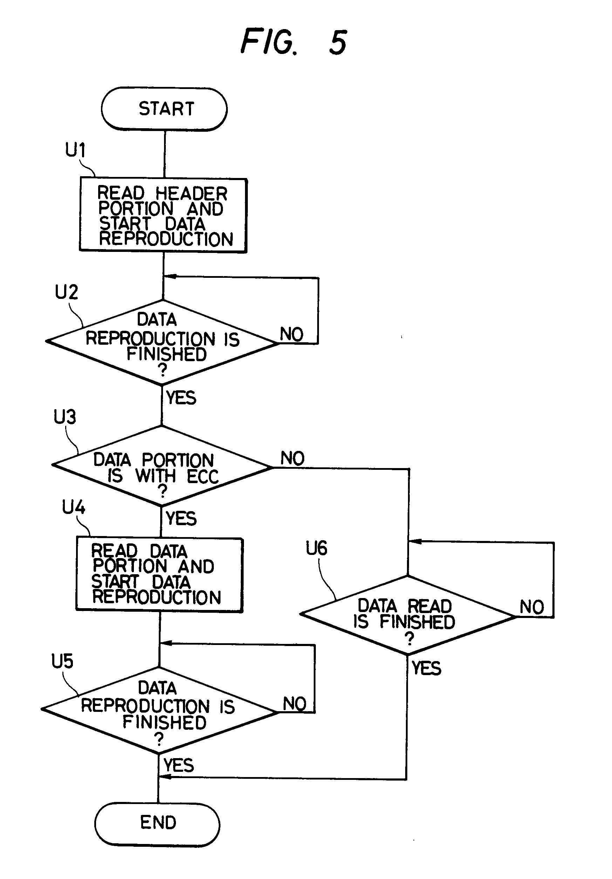

Fig. 5 shows a flow chart of a further detail of the process of data reproduction.

In a step U1, one track of data recorded on the optical card is read, and the header field with the ECC is converted to the original data. In a step U2, whether the data reproduction has been completed or not is checked, and if it has been completed, the process proceeds to a step U3 where whether the data field is with the ECC or not is checked based on the data converted header data. If it is without the ECC, the process proceeds to a step U6 where the process waits until entire data field is read. If it is with the ECC, the process proceeds to a step U4 where the data with the ECC is converted to the original data. In a step U5, the process terminate when the entire data is reproduced.

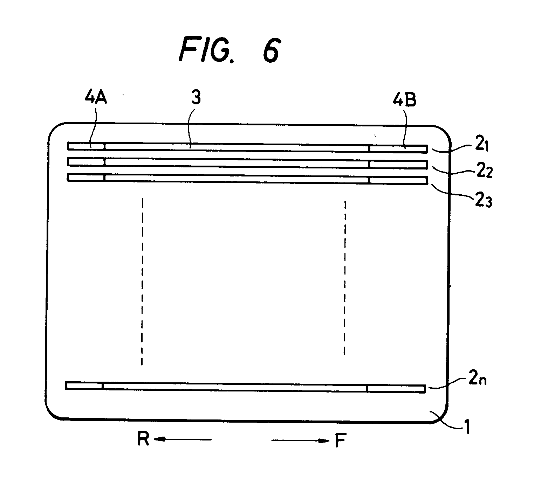

Fig. 6 shows a plan view of another embodiment of the optical card of the present invention. In Fig. 6, the like elements to those shown in Fig. 2 are designated by the like numerals and detailed explanation thereof is omitted.

In this embodiment, header fields 4A and 4B are provided at the opposite ends of each of the tracks $2_1$, $2_2$, ..... $2_n$. Each of the header fields 4A and 4B contains the same information, that is, a track number and information indicating the presence or absence of the ECC in the data field. Each of the header fields 4A and 4B has separately ECC added thereto. The optical card is reciprocally moved in the directions of F and R to record and reproduce information. In the present embodiment, the header field can be read first in both the forward movement and the backward movement. Accordingly, whether the data field is with the ECC or not is immediately determined and real time information processing is attained.

The present invention is applicable to not only the optical card but also any other medium such as disk or tape.

**Claims**

1. An information record medium (1) upon which information is recorded in a plurality of blocks (2), each said block (2) comprising a data field (3) within which information to be reproduced is recorded, and a header field (4) including information identifying that block (2), the block (2) further comprising header field error correction code data, characterized in that the block (2) further comprises an indicator field indicating whether or not the data field (3) is encoded employing an error correction code.

2. A medium (1) according to claim 1, in which the indicator field is part of the header field (4) so that the error correction code data relates also to the indicator field.

3. A medium (1) according to claim 1 or claim 2 comprising at least one block (2) the data field (3) of which is encoded employing an error correction code, and the indicator field of which contains a corresponding indication, and at least one block (2) the data field (3) of which contains data which is not encoded with an error correcting code and the indicator field of which contains a corresponding indication.

4. A medium according to any preceding claim which comprises a card like body (1) upon which said blocks (2) are provided as a plurality of tracks (2) formed in parallel thereupon.

5. A medium according to claim 4 wherein said tracks (2) are optically readable.

6. A medium according to claim 2 having said blocks recorded in a plurality of linear tracks (2), characterized in that there are provided two header fields, (4A, 4B) at opposed ends of each track, containing substantially similar information, whereby the medium (1) may be accessed from either end of the track whilst first reading the block information.

7. A method of recording data in a plurality of blocks on a recording medium (1), comprising the steps of composing header information for each block together with error protection encoding thereof and recording the header information, characterized in that it comprises also the step of deciding, for each block, whether the data is to be recorded employing error correction coding or not; and, depending upon the results of said decision, recording said data directly or error protection encoding said data and recording said error protection encoded data; and recording an indication for each said block of whether or not the data for that block was error correction encoded.

8. A method according to claim 7 of recording a card-like recording medium (1).

9. A method according to claim 7 or claim 8 wherein each said block is recorded in a linear track (2) and header information is recorded at either end of the track.

10. A method of reading an information medium (1) in which data is recorded in blocks, comprising reading a header field (4), characterised by determining from an indicator field whether or not the data is recorded employing an error correction code, and selectively either reading said data directly or decoding said encoded data in dependence upon the result of said determining step.

11. A method according to claim 10 in which said blocks are recorded as linear tracks, characterized in that there are provided header portions at either end of said blocks and the direction of reading or recording alternates reciprocally.

12. Information recording apparatus (5) comprising means (9, 12) for writing data to an information recording medium (1) in blocks (2) comprising a header field (4) and a data field (3), the header field being protected by error correction coding, characterized by control means (7) for selectively either supplying data to said recording means (9, 12) without encoding in a first mode, or encoding said data employing an error correcting code and supplying said encoded data to said recording means (9, 12) in a second mode, and for selecting, for each block, one of said first and second modes, and for instructing said recording means (9, 12) to record an indication of said mode on said medium (1).

13. Apparatus for reading an information medium, comprising means (13, 9) for reading out data recorded as blocks on said medium, characterized in that it comprises means (13, 9) for reading an indicator field for each block of said medium, and control means (7) for selecting, in dependence upon the information in said indicator field, a first mode in which said read out information is reproduced without decoding said information and a second mode in which said read out information is decoded from an error protection encoded condition.

14. Apparatus according to claim 12 or claim 13 adapted for co-operation with a card like information medium (14).

15. Apparatus according to claim 14 wherein said card like medium is an optically recordable/readable card medium.

16. Apparatus according to claim 15 adapted for cooperation with a card (1) carrying a plurality of parallel tracks (2) in which said blocks are recorded each having a header field (4A, 4B) at either end, the reader being arranged to effect reciprocal movement relative to the card to read or write information thereto or therefrom.

**Revendications**

1. Support (1) d'enregistrement d'information sur lequel de l'information est enregistrée en plusieurs blocs (2), chacun desdits blocs (2) comprenant une zone (3) de données dans laquelle de l'information à reproduire est enregistrée, et une zone (4) d'en-tête comprenant une information identifiant ce bloc (2), le bloc (2) comportant en outre une donnée de code de correction d'erreur de zone d'en-tête, caractérisé en ce que le bloc (2) comporte en outre une zone d'indicateur indiquant si la zone (3) de données est codée ou non en utilisant un code de correction d'erreur.

2. Support (1) selon la revendication 1, dans lequel la zone d'indicateur fait partie de la zone (4) d'en-tête de manière que la donnée de code de correction d'erreur concerne aussi la zone d'indicateur.

3. Support (1) selon la revendication 1 ou la revendication 2, comportant au moins un bloc (2) dont la zone (3) de données est codée en utilisant un code de correction d'erreur, et dont la zone d'indicateur contient une indication correspondante, et au moins un bloc (2) dont la zone (3) de données contient des données qui ne sont pas codées avec un code de correction d'erreur et dont la zone d'indicateur contient une indication correspondante.

4. Support selon l'une quelconque des revendications précédentes, qui comporte un corps (1) analogue à une carte sur lequel lesdits blocs (2) sont prévus sous forme de plusieurs pistes (2) formées sur lui de façon à être parallèles.

5. Support selon la revendication 4, dans lequel lesdites pistes (2) peuvent être lues optiquement.

6. Support selon la revendication 2, ayant lesdits blocs enregistrés en plusieurs pistes linéaires (2), caractérisé en ce qu'il est prévu deux zones d'entête, (4A, 4B) à des extrémités opposées de chaque piste, contenant des informations sensiblement similaires, de manière que le support (1) puisse être accédé à partir de chaque extrémité de la piste pendant que l'information des blocs est lue en premier.

7. Procédé d'enregistrement de données dans plusieurs blocs sur un support (1) d'enregistrement, comprenant les étapes qui consistent à composer une information d'en-tête pour chaque bloc en même temps qu'un codage de celui-ci pour le protéger des erreurs, et à enregistrer l'information d'en-tête, caractérisé en ce qu'il comprend aussi l'étape consistant à décider, pour chaque bloc, si la donnée doit être enregistrée en utilisant un codage de correction d'erreur ou non ; et, suivant les résultats de ladite décision, à enregistrer ladite donnée directement ou à soumettre ladite donnée à un codage de protection contre les erreurs et à enregistrer ladite donnée en code de protection contre les erreurs ; et à enregistrer une indication pour chacun desdits blocs, indiquant si la donnée pour ce bloc a été ou non soumise à un codage de correction d'erreur.

8. Procédé selon la revendication 7 pour enregistrer un support d'enregistrement (1) analogue à une carte.

9. Procédé selon la revendication 7 ou la revendication 8, dans lequel chacun desdits blocs est enregistré en une piste linéaire (2) et une information d'en-tête est enregistrée à chaque extrémité de la piste.

10. Procédé de lecture d'un support (1) d'informations dans lequel des données sont enregistrées dans des blocs, comprenant la lecture d'une zone d'en-tête (4), caractérisé en ce qu'il consiste à déterminer à partir d'une zone d'indicateur si la donnée est enregistrée en utilisant ou non un code de correction d'erreur, et, sélectivement, soit à lire ladite donnée directement, soit à décoder ladite donnée codée suivant le résultat de ladite étape de détermination.

11. Procédé selon la revendication 10, dans lequel lesdits blocs sont enregistrés sous forme de pistes linéaires, caractérisé en ce qu'il est prévu des parties d'en-tête à chaque extrémité desdits blocs et le sens de lecture ou d'enregistrement alterne en va-et-vient.

12. Appareil (5) d'enregistrement d'information comprenant des moyens (9, 12) destinés à écrire des données sur un support (1) d'enregistrement d'information dans des blocs (2) comprenant une zone (4) d'en-tête et une zone (3) de données, la zone d'en-tête étant protégée par un codage de correction d'erreur, caractérisé par des moyens (7) de commande destinés à, sélectivement, fournir des données auxdits moyens (9, 12) d'enregistrement sans codage dans un premier mode, ou à coder lesdites données en utilisant un code de correction d'erreur et à fournir lesdites données codées auxdits moyens (9, 12) d'enregistrement dans un second mode, et à sélectionner, pour chaque bloc, l'un desdits premier et second modes, et à demander par instruction auxdits moyens d'enregistrement (9, 12) d'enregistrer une indication dudit mode sur ledit support (1).

13. Appareil pour lire un support d'information, comportant des moyens (13, 9) destinés à extraire des données enregistrées sous forme de blocs sur ledit support, caractérisé en ce qu'il comporte des moyens (13, 9) destinés à lire une zone d'indicateur pour chaque bloc dudit support, et des moyens (7) de commande destinés à sélectionner, suivant l'information se trouvant dans ladite zone d'indicateur, un premier mode dans lequel ladite information extraite est reproduite sans décodage de ladite information et un second mode dans lequel ladite information extraite est décodée à partir d'une condition en codage de protection contre les erreurs.

14. Appareil selon la revendication 12 ou la revendication 13, destiné à coopérer avec un support (14) d'information analogue à une carte.

15. Appareil selon la revendication 14, dans lequel ledit support analogue à une carte est un support à carte pouvant être enregistrée/lue optiquement.

16. Appareil selon la revendication 15, destiné à coopérer avec une carte (1) portant plusieurs pistes parallèles (2) dans lesquelles lesdits blocs sont enregistrés, chacun ayant une zone d'en-tête (4A, 4B) à chaque extrémité, le lecteur étant agencé de façon à effectuer un mouvement alternatif par rapport à la carte pour lire ou écrire une information sur elle.

**Patentansprüche**

1. Informationsaufzeichnungsträger (1), auf dem Informationen in einer Vielzahl von Blöcken (2) aufgezeichnet sind, wobei jeder Block (2) ein Datenfeld (3), in dem zu reproduzierende Informationen aufgezeichnet sind, und ein Kopffeld mit Informationen enthält, die diesen Block (2) identifizieren, und wobei der Block (2) ferner Kopffeld-Fehlerkorrekturcode-Datenenthält, **dadurch gekennzeichnet,** daß der Block (2) ein Indikatorfeld enthält, das anzeigt, ob das Datenfeld (3) unter Verwendung eines Fehlerkorrekturcodes codiert ist oder nicht.

2. Aufzeichnungsträger (1) nach Anspruch 1, bei dem das Indikatorfeld ein Teil des Kopffeldes (4) ist, so daß die Fehlerkorrekturcode-Daten auch das Indikatorfeld betreffen.

3. Aufzeichnungsträger (1) nach Anspruch 1 oder 2, der mindestens einen Block (2), dessen Datenfeld (3) unter Verwendung eines Fehlerkorrekturcodes codiert ist und dessen Indikatorfeld eine entsprechende Anzeige enthält, und mindestens einen Block (2) enthält, dessen Datenfeld (3) Daten enthält, die nicht mit einem Fehlerkorrekturcode codiert sind, und dessen Indikatorfeld eine entsprechende Anzeige enthält.

4. Aufzeichnungsträger nach einem der vorangehenden Ansprüche, der einen kartenförmigen Körper (1) enthält, auf dem die Blöcke (2) als eine Vielzahl von Spuren (2) ausgebildet sind, die darauf parallel gebildet sind.

5. Aufzeichnungsträger nach Anspruch 4, bei dem die Spuren (2) auf optische Weise lesbar sind.

6. Aufzeichnungsträger nach Anspruch 2, auf dem die Blöcke in einer Vielzahl von geraden Spuren (2) aufgezeichnet sind, **dadurch gekennzeichnet,** daß zwei Kopffelder (4A, 4B) an den einander gegenüberliegenden Enden einer jeden Spur ausgebildet sind, die im wesentlichen gleiche Informationen enthalten, wodurch der Aufzeichnungsträger (1) von jedem Ende der Spur her abgefragt werden kann, während zuerst die Blockinformationen gelesen werden.

7. Verfahren zum Aufzeichnen von Daten in einer Vielzahl von Blöcken auf einem Aufzeichnungsträger (1), das die Schritte zum Zusammenstellen von Kopfinformationen für einen jeden Block zusammen mit einer Fehlerschutzcodierung derselben und das Aufzeichnen der Kopfinformationen umfaßt, **dadurch gekennzeichnet,** daß das Verfahren ferner für einen jeden Block einen Schritt zum Entscheiden, ob die Daten unter Fehlerkorrekturcodierung aufzuzeichnen sind oder nicht, zum Aufzeichnen der Daten auf direkte Weise oder zum Fehlerschutzcodieren der Daten und Aufzeichnen der der Fehlerschutzcodierung unterzogenen Daten gemäß den Entscheidungsergebnissen und zum Aufzeichnen einer Anzeige für jeden Block darüber, ob die Daten für diesen Block der Fehlerkorrekturcodierung unterzogen waren oder nicht, umfaßt.

8. Verfahren nach Anspruch 7 zum Aufzeichnen auf einem kartenförmigen Aufzeichnungsträger (1).

9. Verfahren nach Anspruch 7 oder 8, bei dem jeder Block auf einer geraden Spur (2) aufgezeichnet wird und an jedem Ende der Spur die Kopfinformationen aufgezeichnet werden.

10. Verfahren zum Auslesen aus einem Informationsaufzeichnungsträger (1), auf dem Daten in Blöcken aufgezeichnet sind, wobei das Lesen eines Kopffeldes (4) enthalten ist, **dadurch gekennzeichnet,** daß aus einem Indikatorfeld ermittelt wird, ob die Daten unter Anwendung eines Fehlerkorrekturcodes aufgezeichnet sind oder nicht, und in Abhängigkeit von dem Ergebnis der Ermittlung selektiv die Daten direkt gelesen werden oder die codierten Daten decodiert werden.

11. Verfahren nach Anspruch 10, bei dem die Blöcke als gerade Spuren aufgezeichnet sind, **dadurch gekennzeichnet,** daß an jedem Ende der Blöcke Kopfabschnitte vorgesehen sind und die Richtung des Lesens und Aufzeichnens hin und her wechselt.

12. Informationsaufzeichnungsgerät (5) mit einer Vorrichtung (9, 12) zum Einschreiben von Daten in einen Informationsaufzeichnungsträger (1) in Blöcken (2) mit einem Kopffeld (4) und einem Datenfeld (3), wobei das Kopffeld durch Fehlerkorrekturcodierung geschützt ist, **gekennzeichnet durch** eine Steuereinrichtung (7), die selektiv entweder in einer ersten Betriebsart der Aufzeichnungsvorrichtung (9, 12) Daten ohne Codierung zuführt oder in einer zweiten Betriebsart die Daten unter Anwendung eines Fehlerkorrekturcodes codiert und der Aufzeichnungsvorrichtung (9, 12) die codierten Daten zuführt und die für einen jeden Block entweder die erste oder die zweite Betriebsart wählt sowie der Aufzeichnungsvorrichtung (9, 12) das Aufzeichnen einer Anzeige der Betriebsart auf dem Aufzeichnungsträger (1) befiehlt.

13. Gerät zum Auslesen eines Informationsaufzeichnungsträgers, mit einer Vorrichtung (13, 9) zum Auslesen von Daten, die als Blöcke auf dem Aufzeichnungsträger aufgezeichnet sind, **gekennzeichnet durch** eine Vorrichtung (13, 9) zum Auslesen eines Indikatorfeldes für einen jeden Block des Aufzeichnungsträgers und eine Steuereinrichtung (7), die in Abhängigkeit von den Informationen in dem Indikatorfeld eine erste Betriebsart, bei der die ausgelesenen Informationen ohne Decodieren der Informationen wiedergegeben werden, oder eine zweite Betriebsart wählt, bei der die ausgelesenen Informationen aus einem Fehlerschutzcodierungszustand decodiert werden.

14. Gerät nach Anspruch 12 oder 13, das zum Zusammenwirken mit einem kartenförmigen Informationsaufzeichnungsträger (14) ausgelegt ist.

15. Gerät nach Anspruch 14, bei dem der kartenförmige Aufzeichnungsträger eine Karte zum optischen Aufzeichnen/Lesen ist.

16. Gerät nach Anspruch 15, das für das Zusammenwirken mit einer Karte (1) ausgelegt ist, die eine Vielzahl paralleler Spuren (2) trägt, auf denen die Blöcke aufgezeichnet sind, die an jedem Ende ein Kopffeld (4A, 4B) haben, wobei der Leser zu einer Hin- und Herbewegung in bezug auf die Karte gestaltet ist, um Informationen aus dieser auszulesen oder in diese einzuschreiben.

## FIG. 1

## FIG. 2

# FIG. 3

START

S1 CONVERT HEADER PORTION INTO INFORMATION WITH ECC

S2 ECC IS NECESSARY IN DATA PORTION ? — NO

YES

S3 CONVERT DATA PORTION INTO ONE WITH ECC

S4 RECORD IN MEDIUM

END

# FIG. 4

START

T1 READ ONE TRACK

T2 REPRODUCE HEADER PORTION

T3 DATA PORTION IS WITH ECC ? — NO

YES

T4 REPRODUCE DATA PORTION

END

# FIG. 5

START

U1 — READ HEADER PORTION AND START DATA REPRODUCTION

U2 — DATA REPRODUCTION IS FINISHED ? — NO

YES

U3 — DATA PORTION IS WITH ECC ? — NO

YES

U4 — READ DATA PORTION AND START DATA REPRODUCTION

U6 — DATA READ IS FINISHED ? — NO

YES

U5 — DATA REPRODUCTION IS FINISHED ? — NO

YES

END

## FIG. 6